# EUROPÄISCHE PATENTSCHRIFT

(11) **EP 0 506 916 B1**
(45) Veröffentlichungstag und Bekanntmachung des Hinweises auf die Patenterteilung: **11.02.1998**
(21) Anmeldenummer: 91918304.6
(22) Anmeldetag: 21.10.1991
(51) Int. Cl.: A62B 23/06, B29C 67/20, C08J 9/00

(54) **NASENFILTER UND VERFAHREN ZU SEINER HERSTELLUNG**
NOSE-FILTER AND PROCESS FOR PRODUCING THE SAME
FILTRE POUR NEZ ET SON PROCEDE DE FABRICATION

(30) Priorität: 19.10.1990 DE 4033344
(43) Veröffentlichungstag der Anmeldung: 07.10.1992
(73) Patentinhaber: Draenert, Klaus, Dr.med.Dr.med.habil., D-81545 München (DE)
(72) Erfinder: Draenert, Klaus, Dr.med.Dr.med.habil., D-81545 München (DE)
(86) Internationale Anmeldenummer: EP9101998
(87) Internationale Veröffentlichungsnummer: WO9206742

(56) Entgegenhaltungen:
- EP-A- 0 332 371
- BE-A- 530 680
- FR-A- 1 392 000
- FR-A- 1 395 197
- FR-A- 1 402 857
- US-A- 3 476 844
- US-A- 4 383 956

## Beschreibung

Die Erfindung betrifft ein Nasenfilter und ein Verfahren zu seiner Herstellung.

In der Filtertechnologie besteht ein Bedürfnis nach Filtern, die eine Struktur aufweisen, mit der es bei durchgehender Porosität des Filters gelingt, entlang großer Oberfläche Gase oder Flüssigkeiten zu absorbieren bzw. Teilchen in einem einstellbaren Hohlraumsystem des Filters festzuhalten.

Vor allem am Arbeitsplatz, wo sich Gase entwickeln, beispielsweise hohe Ozonkonzentrationen beim Arbeiten an UV-Mikroskopen, machen sich toxische Wirkungen dieser Gase unangenehm bemerkbar in Form von Reizungen der Schleimhäute, die bis hin zur Reizung und Entzündung der Lunge führen.

Der Erfindung liegt die Aufgabe zugrunde, ein nachhaltig wirksames und einfaches, in seiner Funktion hochleistungsfähiges, in seiner Verträglichkeit biologisch inertes und in seiner Handhabung sicheres Nasenfilter, zu entwickeln, das durch Variation seiner Komponenten den Anforderungen an die Toxizität der Umgebung reproduzierbar angepaßt werden kann.

Aus FR-A-1 395 197 ist ein poröses Nasenfilter aus einem zylindrischen Körper bekannt, das aus verschiedenen Kunststoffen hergestellt werden kann. Aus der Figur ist eine Faserfilzstruktur des Filters entnehmbar.

Aus US-A-4 383 956 ist ein Filterelement aus einem Polymer zur Verwendung in einer Kartusche einer Atemmaske bekannt. Das Filterelement wird entweder dadurch hergestellt, daß das flüssige Polymer mit einem Treibmittel behandelt wird, oder daß einem gießfähigen Vorläufer des Polymers lösliche Additive untergemischt werden, der Polymer-Vorläufer dann in die gewünschte Form gegossen wird und die lösbaren Additive anschließend herausgelöst werden. Vor oder nach dem Gießen und Herauslösen wird ein Mittel zum Neutralisieren toxischer Gase eingeführt.

Insbesondere liegt der Erfindung die Aufgabe zugrunde, ein Nasenfilter und ein Verfahren zu seiner Herstellung bereitzustellen, die es ermöglichen, das Filter im Hinblick auf die Porosität und die Dicke der tragenden Strukturen als auch im Hinblick auf andere gewünschte Eigenschaften, wie biologische Verträglichkeit, exakt nach den jeweiligen Bedürfnissen einzustellen.

Die vorstehende Aufgabe wird durch das Nasenfilter gemäß den Patentansprüchen gelöst. Erfindungsgemäß ist es auch möglich, eine einfache und preisgünstige Reihe von Nasenfiltern bereitzustellen, von denen jedes für sich wirksam spezifische Funktionen zu erfüllen im Stande ist.

Die Erfindung löst ein altes Problem in der Filterherstellung, nämlich die Herstellung von durchgehend porösen Gerüsten mit einer einstellbaren Porosität.

Die Erfindung geht von dem Grundgedanken aus, leicht entfernbare, beispielsweise leicht lösliche oder leicht schmelzbare Formkörper miteinander zu verbinden und um die Formkörper herum ein dreidimensionales Gerüst aus tragenden Strukturen zu schaffen, vorzugsweise aus einem gießfähigen Material. Im Anschluß daran können die Formkörper entweder physikalisch oder chemisch, vorzugsweise durch Anwendung des Prinzips der Wasserlöslichkeit oder der Schmelzbarkeit, oder durch Anwendung von Hitze wieder entfernt werden. Dabei wird jeweils von einem durch die Formkörper gebildeten Negativmodell des Nasenfilters ausgegangen.

Das erfindungsgemäße Nasenfilter unterscheidet sich von mit herkömmlichen Verfahren hergestellten Filtern dadurch, daß sich sowohl die Porosität als auch die Stärke der trabekelartigen tragenden Strukturen exakt einstellen lassen.

Im Prinzip können alle beliebigen Werkstoffe in die Negativ- oder Positivform gebracht werden, indem beispielsweise wasserlösliche oder säurelösliche Formkörper mit schmelzbaren Materialien oder wasserlösliche oder säurelösliche Formkörper mit sinterfähigen, gießbaren Materialverbunden oder im Spritzgußverfahren verarbeitbaren Kunststoffen in der Weise kombiniert werden, daß jeweils eine Sorte Formkörper, entweder physikalisch oder chemisch oder auf andere Weise, wieder herauslösbar ist und das dreidimensionale Gerüst als Stützgerüst verbleibt. Das Stützgerüst kann anschließend durch physikalische oder chemische Verfahren verfestigt, oberflächenbehandelt oder mechanisch nachbearbeitet werden.

Die Formkörper und das vorzugsweise aus einem gießbaren Material bestehende Stützgerüst können auch zusammen, beispielsweise mechanisch, weiterverarbeitet werden und erst im Anschluß daran physikalisch oder chemisch separiert werden. Die so erhaltenen dreidimensionalen Gerüste können wiederum temporär als Formkörper für Negativmodelle dienen, so daß sowohl das dreidimensionale Gerüst mit durchgehender Porosität als auch die Packung bzw. das Konglomerat aus miteinander verbundenen und vorzugsweise kugelförmigen Formkörpern wechselseitig als Modell eingesetzt werden können. Auf diese Weise können alle möglichen Materialien, Materialkombinationen und Verbundwerkstoffe zu dem erfindungsgemäßen Nasenfilter verarbeitet werden.

Das erfindungsgemäße Nasenfilter kann auch als Träger für Wirkstoffe verwendet werden, z.B. alle diejenigen Wirkstoffe, die auf Oberflächen aufgetragen werden können.

Mit den erfindungsgemäßen Nasenfiltern ist jede beliebige Porosität einstellbar und jedes beliebige aktiv absorbierende Material kann in Kombination mit einer beliebigen Porosität verwendet werden. Es kann auch ein makroskopisch großporiges Filtersystem mit einem mikroporösen Filtersystem kombiniert werden.

Das Material für das dreidimensionale Gerüst ist vorzugsweise gießbar oder spritzbar, beispielsweise im Spritzgußverfahren. Silikon, ein Kautschukderivat oder ein verwandtes Polymer auf Gummibasis ist als Material für das dreidimensionale Gerüst des Filters bevorzugt.

Die als Platzhalter für das Hohlraumsystem des Nasenfilters dienenden Formkörper weisen vorzugsweise die Form von Kugeln oder gleichmäßigen geometrischen Körpern, beispielsweise Vielecken auf, es kann aber auch Granulatmaterial als Formkörper verwendet werden. Vorzugsweise ist das Material der Formkörper leicht löslich oder leicht schmelzbar. Besonders bevorzugt sind Formkörper aus einem wasserlöslichen Material, beispielsweise aus Zucker, die zunächst im Wasserdampf zur Bildung eines Formkörperkonglomerats fest miteinander verklebt werden können und nach der Ausbildung und Aushärtung des dreidimensionalen Gerüsts ausgewaschen werden können, beispielsweise im Wasserbad oder in einer Waschmaschine.

Da sowohl die Größe als auch die Schüttdichte und die Art der Verbindung der als Platzhalter für das Hohlraumsystem des Nasenfilters dienenden Formkörper miteinander frei wählbar ist, ist auch das Hohlraumsystem des fertigen Filters bezüglich seiner Porosität frei einstellbar. Beispielsweise können kugelförmige Formkörper verwendet werden, wenn ein Hohlraumsystem mit im wesentlichen kugelförmigen und miteinander in Verbindung stehenden Hohlräumen angestrebt wird. Wenn ein Hohlraumsystem mit unterschiedlich großen Hohlräumen angestrebt wird, können Formkörper unterschiedlicher Größe und/oder Form miteinander gemischt werden. Die gesamte Porosität des fertigen Nasenfilters ist durch Einstellung, Variation und Kombination der Form und/oder der Schüttdichte der Formkörper und/oder Wahl des Verfahrens, durch das die Formkörper zu einem Konglomerat oder einer dichten Formkörper-Packung miteinander verbunden werden, gezielt einstellbar.

Die Formkörper können, vorzugsweise durch punktförmige Kontakte, chemisch oder physikalisch miteinander verschweißt, verklebt oder oberflächlich miteinander verbunden werden, beispielsweise durch Einwirkung von Wärme und/oder Druck, im Sinterverfahren oder durch Einwirkung von Wasserdampf. Das bevorzugte Verfahren hängt vom Material der Formkörper ab. Die Form und Gestaltung der Bälkchen bzw. Trabekel des dreidimensionalen Gerüsts ist erfindungsgemäß ebenso vorgebbar und gezielt je nach Verwendungszweck einstellbar.

Die bevorzugte Größe der Formkörper beträgt zwischen etwa 0,5 und 1,5 mm, besonders bevorzugt 0,8 bis 1,2 mm.

Je nach der beabsichtigten Verwendung können dem Nasenfilter auch verschiedene Wirkstoffe zugesetzt werden und das Filter bzw. das dreidimensionale Gerüst kann mit Aktivkohle oder einem anderen, stark gas- und/oder flüssigkeitsabsorbierenden Füller versetzt werden, beispielsweise in einer Konzentration zwischen 5 und 80 Gew.-%.

Durch Einsatz des erfindungsgemäßen Nasenfilters im Vestibulum nasi kann die Atemluft frei von Partikeln gehalten werden. Durch Anreicherung der Gerüstsubstanz des porösen Nasenfilters mit aktiv absorbierenden Materialien, wie Aktivkohle, kann darüber hinaus ein großer Teil der Gase aus der Umgebung absorbiert werden und die Atemwege können dadurch vor Kontamination durch toxische Gase bewahrt werden. Dies gelingt beispielsweise durch den erfindungsgemäßen, sehr gewebeverträglichen und angenehm zu tragenden, durchgängig porösen Nasenfilter mit trabekulärer Struktur, welcher um Formkörper, insbesondere Kugeln aus Zucker, mit einem Gießmaterial aus Silikonkautschuk hergestellt wird. Die Herstellung geschieht in der Weise, daß Zuckerkugeln im Wasserdampf zusammengesintert und anschließend mit einem Silikonkautschuk-Gießgemisch aus Aktivkohle und Silikonkautschuk ausgegossen werden. Nach Aushärtung des Materials wird die trabekuläre Struktur aus Silikonkautschuk in der Waschmaschine von dem Zuckerinlet befreit und kann anschließend als Nasenfilter eingesetzt werden.

Das erfindungsgemäße Nasenfilter kann in einfacher Weise in verschiedenen Formen hergestellt werden, wobei die äußere Form direkt an die Form des Vestibulum nasi angepaßt wird. Abdrücke des Vestibulum nasi können hierzu beispielsweise an Leichen gewonnen werden. Auf diese Weise ist keine Nachbearbeitung des Nasenfilters notwendig.

Mit den erfindungsgemäßen Filtern gelingt es nicht nur, die Atemluft partikelfrei zu halten, sondern sie kann auch von schädlichen Gasen freigehalten werden, so daß alle Reizungen am Arbeitsplatz verhindert werden. Das erfindungsgemäße Nasenfilter kann aber auch allgemein beim Aufenthalt in kontaminierter Luft getragen werden, wie sie beispielsweise heute die Großstadtluft überall darstellt.

Das erfindungsgemäße Nasenfilter ist besonders wirksam, wenn es pharmazeutisch wirksame Substanzen enthält, die beispielsweise in Art einer Beschichtung auf die innere Oberfläche des Filters aufgebracht werden können. Derartige Substanzen sind beispielsweise bronchiolytisch oder sekretolytisch wirksame Substanzen, respiratorisch wirksame Substanzen, wie ätherische Öle, antibiotisch wirksame Substanzen oder Vasokonstriktoren.

Das Nasenfilter kann auch vorzugsweise 1 bis 60 % eines Füllermaterials enthalten, das stark absorptionsfähig ist, beispielsweise Aktivkohle oder ein hochporöses Calciumphosphat. Das erfindungsgemäße Nasenfilter kann mit Aktivkohle beschichtet sein oder es kann für das Gerüst des Filters ein Verbundwerkstoff verwendet werden, der Aktivkohle oder Calciumphosphat hoher Porosität enthält.

In einer weiteren Ausführungsform weist das erfindungsgemäße Nasenfilter eine äußere, vorzugsweise mehrschichtige Hülle auf.

### Beispiele

### Beispiel 1

In eine in Metall oder Kunststoff geschweißte Form nach einem Abdruck eines Vestibulum nasi, die in entsprechender Größenabstufung verwendet werden kann, werden Zuckerkugeln mit einer Größe von etwa 0,3 bis 1,0 mm lose geschüttet, auf dem Rüttler verdichtet und anschließend im Wasserdampf unter Anwendung von Vakuum miteinander verschweißt. Das so entstandene Konglomerat aus Zuckerkugeln wird in der Form mit einem Gemisch aus Silikon und Aktivkohle, wobei der Anteil der Aktivkohle zwischen 5 bis 60 % betragen kann, ausgegossen und anschließend ausgehärtet. Danach wird der entstandene Verbundkörper aus der Form herausgenommen und in Aqua destillata vorsichtig von dem Zuckerinlet befreit. Bei dem Auswaschen ist darauf zu achten, daß die Aktivkohle aus dem Verbundmaterial des Silikons nicht ebenfalls entfernt wird. Deshalb erfolgt das Auswaschen vorzugsweise in stehendem Aqua destillata. Nach dem Auswaschen bleibt die Struktur aus Silikon und Altivkohle als fertiges Nasenfilter zurück.

### Beispiel 2

Ein Konglomerat aus Zuckerkugeln wird wie in Beispiel 1 erläutert hergestellt. Um das Konglomerat wird ein gießbares Gemisch aus Zellulosefasern im Schleuderverfahren gegossen. Anschließend wird der Zucker in Aqua destillata herausgelöst. Es wird ein trabekuläres Filtergerüst aus Zellulose gewonnen, das sowohl Makro- als auch Mikroporosität aufweist. Dieses Filter wird anschließend in einer Kohleverdampfungsanlage mit Kohlenstoff beschichtet. Danach wird das Nasenfilter in eine poröse dünne Folie, vorzugsweise aus Safran, eingeschweißt und ist danach applikationsfähig.

## Patentansprüche

1. Nasenfilter mit hoher Porosität zum temporären Einsetzen über das Vestibulum nasi in die äußeren Atemwege, wobei das Filter in seiner äußeren Form an die Form des Vestibulum nasi angepaßt ist und wobei das Filter biologisch inert und schleimhautfreundlich ist und aus einem dreidimensionalen Gerüst aus bälkchenartigen Strukturen besteht, die miteinander in Verbindung stehende und vorgebbar einstellbare Hohlräume umschließen, wobei das dreidimensionale Gerüst dadurch hergestellt wird, daß als Platzhalter für die Hohlräume dienende Formkörper zunächst zu einem dreidimensionalen Formkörperkonglomerat miteinander verbunden werden, danach die bälkchenartigen Strukturen aus einem sich vom Material der Formkörper unterscheidenden Material um die Formkörper ausgebildet werden und die Formkörper nach dem Ausbilden der das Gerüst bildenden bälkchenartigen Strukturen ohne Angreifen der bälkchenartigen Strukturen entfernt werden.

2. Nasenfilter nach Anspruch 1, wobei die als Platzhalter für die Hohlräume dienenden Formkörper eine Größe von 0,5 bis 1,5 mm aufweisen.

3. Nasenfilter nach Anspruch 1 oder 2, wobei das Material des Filters gießbar oder spritzbar ist, beispielsweise im Spritzgußverfahren verarbeitbar.

4. Nasenfilter nach einem der Ansprüche 1 bis 3, wobei das Filter bzw. das dreidimensionale Gerüst aus einem Silikon, einem silikonartigen Polymer, einem Kautschukabkömmling oder einem anderen gummiartigen Polymer besteht.

5. Nasenfilter nach einem der Ansprüche 1 bis 4, wobei das Filter elastisch ist.

6. Nasenfilter nach einem der Ansprüche 1 bis 5, wobei das Filter bzw. das dreidimensionale Gerüst zwischen 1 und 60 % eines hochabsorptionsfähigen Füllermaterial enthält, beispielsweise Aktivkohle oder ein hochporöses Calciumphosphat.

7. Nasenfilter nach einem der Ansprüche 1 bis 6, wobei das Filter zusätzlich mindestens ein pharmazeutisch wirksames Agens enthält, vorzugsweise in einer Konzentration zwischen 0,01 und 10 Gew.-%, besonders bevorzugt 0,1 bis 5 Gew.-%, beispielsweise Vasokonstriktoren und/oder antibiotisch wirksame Substanzen und/oder broncholytisch wirksame oder sekretolytisch wirksame Substanzen und/oder respiratorisch wirksame Substanzen, wie ätherische Öle, wobei das pharmazeutisch wirksame Agens vorzugsweise in Art einer Beschichtung auf die innere Oberfläche des Filters aufgebracht ist.

8. Nasenfilter nach einem der Ansprüche 1 bis 7, wobei das Filter neben dem durch die Hohlräume gebildeten makroskopisch großporigen Filtersystem ein mikroporöses Filtersystem aufweist.

9. Nasenfilter nach Anspruch, wobei das dreidimensionale Gerüst aus einer gießbaren Zellulosemasse mit einer Porengröße zwischen 1 und 5 µm geformt wird, wobei das Zellulosegerüst vorzugsweise mit Aktivkohle in einer Konzentration von vorzugsweise zwischen 5 und 60 % versetzt ist.

10. Nasenfilter nach Anspruch 8 oder 9, wobei die Strukturen aus einem Verbundwerkstoff aus 1 bis 60 % Aktivkohle und/oder einem Calciumphosphat hoher Porosität zwischen 0,5 und 0,8 ml/g und einem polymeren Verbundwerkstoff aus Silikon oder einem kautschukähnlichen körperverträglichen Material bestehen.

11. Nasenfilter nach einem der Ansprüche 8 bis 10, wobei das Filter Zellulosefäden aufweist, die vorzugsweise mit Kohle beschichtet sind, und/oder wobei das Filter mit Aktivkohle beschichtet sind.

12. Nasenfilter nach einem der Ansprüche 1 bis 11, wobei das Filter von einer porösen Hülle umgeben ist.

13. Verfahren zum Herstellen eines Nasenfilters mit hoher Porosität nach einem der Ansprüche 1 bis 12, mit den folgenden Verfahrensschritten:
Verbinden von als Platzhalter für die Hohlräume des Nasenfilters dienenden Formkörpern zu einem dreidimensionalen Formkörperkonglomerat,
Ausbilden des dreidimensionalen Gerüsts aus bälkchenartigen Strukturen aus einem sich vom Material der Formkörper unterscheidenden Material um die Formkörper, und Entfernen der Formkörper nach dem Ausbilden der das Gerüst bildenden Strukturen ohne Angreifen der Strukturen, so daß lediglich das dreidimensionale Gerüst verbleibt und das Nasenfilter bildet.

14. Verfahren nach Ansprüch 13, wobei das die bälkchenartigen Strukturen bildende Material ein gießbares Fasergemisch ist.

15. Verfahren nach Anspruch 13 oder 14, wobei die Formkörper chemisch oder physikalisch miteinander verbindbar sind und nach dem Ausbilden der Strukturen chemisch oder physikalisch entfernbar sind.

16. Verfahren nach einem der Ansprüche 13 bis 15, wobei die Formkörper aus Zucker oder einem anderen leicht löslichen, vorzugsweise wasserlöslichen Material bestehen, oder wobei die Formkörper aus einem leicht schmelzbaren Material, wie Wachs, bestehen.

17. Verfahren nach einem der Ansprüche 13 bis 16, wobei die Formkörper im wesentlichen kugelförmig sind und/oder eine Größe zwischen 0,2 mm und einigen mm, vorzugsweise bis zu etwa 5 mm aufweisen.

18. Verfahren nach einem der Ansprüche 13 bis 17, wobei eine Mischung von Formkörpern verschiedener Größe als Platzhalter verwendet wird.

19. Verfahren nach einem der Ansprüche 13 bis 18, wobei die Dichte der Schüttung der Formkörper variierbar ist.

20. Verfahren nach einem der Ansprüche 17 bis 19, wobei die kugelförmigen Formkörper einen Durchmesser zwischen 0,5 und 1,5 mm, bevorzugt 0,8 bis 1,2 mm aufweisen.

## Claims

1. A high-porosity nasal filter for temporary insertion into the external respiratory pathways via the nasal vestibule, the external shape of said filter being adapted to the shape of the vestibule, and the filter being of a material different from the material of the shaped bodies, being biologically inert, compatible with mucosa and consisting of a three-dimensional framework of trabecular structures which are interconnected and encompass cavities adapted to be adjusted in a predetermined manner, wherein the three-dimensional framework is produced by initially interconnecting shaped bodies serving as spacers for the cavities in a three-dimensional shaped body conglomerate, by thereafter forming about the shaped bodies the trabecular structures from a material different from the material of the shaped bodies and by removing the shaped bodies after constructing the trabecular structures forming the framework without destroying said trabecular structures.

2. A nasal filter according to claim 1, wherein the shaped bodies serving as spacers for the cavities have a size ranging from 0.5 to 1.5 mm.

3. A nasal filter according to claim 1 or 2, wherein the material of the filter is adapted to be cast or molded, for example in processing by injection molding.

4. A nasal filter according to one of claims 1 to 3, wherein the filter or the three-dimensional framework consists of a silicone, a silicone-like polymer, a rubber derivative or another rubber-like polymer.

5. A nasal filter according to one of claims 1 to 4, wherein the filter is elastic.

6. A nasal filter according to one of claims 1 to 5, wherein the filter or the three-dimensional framework contains between 1 and 60 % of a highly absorptive filler material, e.g. activated charcoal or a highly porous calcium phosphate.

7. A nasal filter according to one of claims 1 to 6, wherein the filter additionally contains at least one pharmaceutically active agent, preferably in a concentration between 0.01 and 10 % by weight, especially advantageously 0.1 to 5 % by weight, for example vasoconstrictors and/or antibiotically active substances and/or broncholytically or secretolytically active substances and/or respiratorically active substances such as essential oils, the pharmaceutically active agent being preferably applied to the inner surface of the filter as a kind of coating.

8. A nasal filter according to one of claims 1 to 7, wherein the filter has a microporous filter system in addition to the macroscopic, macroporous filter system formed by the cavities.

9. A nasal filter according to claim 8, wherein the three-dimensional framework is formed of a castable cellulose composition with a pore size between 1 and 5 µm, the cellulose framework being preferably filled with activated charcoal in a concentration preferably between 5 and 60 %.

10. A nasal filter according to claim 8 or 9, wherein the structures consist of a composite material comprising 1 to 60 % activated charcoal and/or a high-porosity calcium phosphate between 0.5 and 0.8 ml/g and a polymeric composite material of silicone or a rubber-like material compatible with the body.

11. A nasal filter according to one of claims 8 to 10, wherein the filter comprises cellulose fibers that are preferably coated with charcoal and/or the filter is coated with activated charcoal.

12. A nasal filter according to one of claims 1 to 11, wherein the filter is surrounded by a porous shell.

13. A process for producing a high-porosity nasal filter according to one of claims 1 to 12, comprising the following process steps:
interconnecting shaped bodies serving as spacers for the cavities of the nasal filter to form a three-dimensional shaped body conglomerate,
constructing the three-dimensional framework of trabecular structures consisting of a material different from the material of the shaped bodies of said shaped bodies around said shaped bodies and removing the shaped bodies after constructing the structures forming the framework without destroying said structures so that only the three-dimensional framework remains, thus forming the nasal filter.

14. A process according to claim 13, wherein the material forming the trabecular structures is a fiber mixture adapted to be cast.

15. A process according to claim 13 or 14, wherein the shaped bodies are adapted to be interconnected chemically or physically and are adapted to be removed chemically or physically after construction of the structure.

16. A process according to one of claims 13 to 15, wherein the shaped bodies consist of sugar or another easily soluble, preferably water-soluble material or wherein the shaped bodies consist of an easily soluble material such as wax.

17. A process according to one of claims 13 to 16, wherein the shaped bodies are substantially spherical and/or have a size between 0.2 mm and a few millimeters, preferably up to approx. 5 mm.

18. A process according to one of claims 13 to 17, wherein a mixture of shaped bodies of different sizes is used as spacers.

19. A process according to one of claims 13 to 18, wherein the density of the bulk of the shaped bodies is variable.

20. A process according to one of claims 17 to 19, wherein the spherical shaped bodies have a diameter between 0.5 and 1.5 mm, preferably 0.8 to 1.2 mm.

## Revendications

1. Filtre nasal de porosité élevée pour mise en place temporaire à l'intérieur des voies respiratoires externes en traversant le vestibule des fosses nasales, la forme externe du filtre étant adaptée à celle du vestibule des fosses nasales et le filtre étant composé d'un matériau différent de celui des corps de formage, inerte sur le plan biologique et bien supporté par les muqueuses, constitué par une charpente tridimensionnelle dont la structure à type de bâtonnets englobe les espaces vides qui sont reliés entre eux et définissables, la charpente tridimensionnelle étant réalisée par le fait que les corps de formage servant d'écarteurs pour les espaces vides sont d'abord reliés entre eux en tant que conglomérat tridimensionnel de ces corps de formage, puis que sont placés autour des corps de formage les structures à type de bâtonnets dont le matériau est différent de celui des corps de formage, et qu'après configuration des structures à type de bâtonnets qui réalisent la charpente, les corps de formage peuvent être retirés sans qu'il soit porté atteinte aux structures à type de bâtonnets.

2. Filtre nasal selon revendication 1, les corps de formage servant d'écarteur pour les espaces vides et présentant une dimension de 0,5 à 1,5 mm.

3. Filtre nasal selon revendication 1 ou 2, le matériau du filtre pouvant être coulé ou injecté pour être travaillé au moyen d'un procédé de moulage par injection, par exemple.

4. Filtre nasal selon l'une des revendications 1 à 3, le filtre ou bien la charpente tridimensionnelle étant constitué par un silicone, un polymère de type silicone, un dérivé du caoutchouc ou un autre polymère de type caoutchouc.

5. Filtre nasal selon l'une des revendications 1 à 4, le filtre étant élastique.

6. Filtre nasal selon l'une des revendications 1 à 5, le filtre ou la charpente tridimensionnelle renfermant de 1 à 60 % d'un matériau de remplissage capable d'une forte absorption, du charbon actif par exemple ou bien du phosphate de calcium de porosité élevée.

7. Filtre nasal selon l'une des revendications 1 à 6, le filtre comportant en supplément au moins un agent actif sur le plan pharmaceutique, à une concentration de préférence comprise entre 0,01 et 10 % du poids, électivement de 0,1 à 5 % du poids, par exemple des vasoconstricteurs et/ou des substances à action antibiotique et/ou broncholytique ou sécrétolytique et/ou des substances actives au niveau respiratoire telles que des huiles essentielles, l'agent actif sur le plan pharmaceutique étant appliqué de préférence sous forme de couche revêtant la surface interne du filtre.

8. Filtre nasal selon l'une des revendications 1 à 7, le filtre près duquel le système filtrant à gros pores, vu sous l'aspect macroscopique que constituent les espaces vides, présentant un système filtrant microporeux.

9. Filte nasal selon revendication 8, la charpente tridimensionnelle étant formée à partir d'une masse cellulosique coulable en réalisant des pores dont la grandeur se situe entre 1 et 5 µm, la charpente cellulosique comportant de préférence du charbon actif à une concentration comprise électivement entre 5 et 60 %.

10. Filtre nasal selon revendication 8 ou 9, les structures en matière composite renfermant de 1 à 60 % de charbon actif et/ou un phosphate de calcium de porosité élevée à raison de 0,5 à 0,8 ml/g et un polymère composite à base de silicone ou d'un matériau à type de caoutchouc bien supporté par le corps.

11. Filtre nasal selon l'une des revendications 8 à 10, le filtre présentant des fils de cellulose revêtus de préférence d'une couche de charbon et/ou le filtre étant revêtu de charbon actif.

12. Filtre nasal selon l'une des revendications 1 à 11, le filtre étant entouré d'une enveloppe poreuse.

13. Procédé de fabrication d'un filtre nasal à porosité élevée selon l'une des revendications 1 à 12, avec l'une des étapes des procédés suivants:
Raccordement des corps de formage servant d'écarteur pour les espaces vides du filtre nasal afin de constituer un conglomérat des corps de formage tridimensionnel,
réalisation de la charpente tridimensionnelle en structures de type à bâtonnets à l'aide d'un matériau différent de celui des corps de formage, et enlèvement des corps de formage après réalisation des structures formant la charpente sans porter atteinte aux structures, de sorte qu'il ne subsiste qu'une charpente tridimensionnelle qui constitue le filtre nasal.

14. Procédé selon revendication 13, le matériau qui constitue les structures à type de bâtonnets étant un mélange de fibres coulable.

15. Procédé selon revendication 13 ou 14, les corps de formage pouvant être combinables chimiquement ou physiquement et s'éliminant par voie chimique ou physique après réalisation des structures.

16. Procédé selon l'une des revendications 13 à 15, les corps de formage étant en sucre ou en une autre substance facilement soluble, de préférence en matériau hydrosoluble ou les corps de formage étant composés d'un matériau fondant facilement comme la cire.

17. Procédé selon l'une des revendications 13 à 16, les corps de formage étant essentiellement de forme conique et/ou d'une dimension de 0,2 à plusieurs mm, et de préférence atteignant jusqu'à près de 5 mm.

18. Procédé selon l'une des revendications 13 à 17, utilisant en tant qu'écarteur un mélange des corps de formage de grandeur diverse.

19. Procédé selon l'une des revendications 13 à 18, la masse volumique des corps de formage étant variable.

20. Procédé selon l'une des revendications 17 à 19, les corps de formage coniques présentant un diamètre de 0,5 à 1,5 mm et préférentiellement de 0,8 à 1,2 mm.
